# EUROPEAN PATENT APPLICATION

(11) **EP 3 910 438 A1**
(43) Date of publication of application: **17.11.2021**
(21) Application number: 20400007.9
(22) Date of filing: 12.05.2020
(51) Int. Cl.: G05D 1/00, B60K 28/02, B60W 40/08, B64C 39/02

(54) **A CONTROL AND MONITORING DEVICE FOR A VEHICLE**

(71) Applicant: AIRBUS HELICOPTERS DEUTSCHLAND GmbH, 86609 Donauwörth (DE)
(72) Inventor: Grohmann, Boris, D-81247 Munich (DE)
(74) Representative: GPI Brevets

(57) **Abstract**

The present embodiments relate to a control and monitoring device 120 for a vehicle 100, and, more particularly, to a control and monitoring device 120 for a vehicle 100 with a controllable device 130, whereby the vehicle 100 is operated by a vehicle operator 110 wearing a personalized wearable device 111. The control and monitoring device 120 may include a vehicle management system 200 that is adapted to send alert information to and to receive status information from the personalized wearable device 111 via a wireless radio transmitter and receiver unit 106. The status information may include at least one of preferred workspace settings of the vehicle operator 110 or health-related information about the vehicle operator 110. The vehicle management system 200 may control the controllable device 130 based on the at least one of the preferred workspace settings or the health-related information.

## Description

The present invention relates to a control and monitoring device for a vehicle, and, more particularly, to a control and monitoring device for a vehicle with a controllable device, whereby the vehicle is operated by a vehicle operator wearing a personalized wearable device. The present invention further relates to a vehicle comprising such a control and monitoring device.

Various vehicles are provided with control and monitoring devices. For instance, aircraft such as rotorcraft are provided with control and monitoring devices that monitor the status of the aircraft including engine start and shutdown, take-off and landing times, system degradations or failures, flight envelope violations, etc. and record the related information in a black box. Aircraft are often also provided with an automatic flight control system (AFCS) and/or a flight management system (FMS).

An AFCS generally includes flight control computers (FCC), an autopilot, yaw dampers, stability augmentation system (SAS), automatic elevator trim control, and assorted servos and actuators. AFCS capabilities may vary in the extent of programmability, in the level of integration of navigational aids, in the integration of flight director and auto-throttle systems, and in the combination of the command elements of these various systems into a single integrated flight control human interface.

A flight management system is a specialized computer system that automates a wide variety of in-flight tasks, thereby reducing the workload on the flight crew. A primary function of FMS is the planning and in-flight management of the flight plan, including target route (e.g. in terms of way points, heading), altitude, speed etc.

The AFCS uses various different sensors including an air data, attitude and heading reference system" (ADAHRS), a global positioning system (GPS) and an inertial navigation system (INS) often backed up by radio navigation to determine the aircraft's position, attitude, altitude, speed and accelerations and determines suitable commands for assorted servos and actuators based on flight mechanics calculations.

When the vehicle operator is "hands-on", the AFCS supports the vehicle operator to execute the intended flight maneuvers based on his manual flight control inputs on interceptors (e.g. cyclic and collective sticks, pedals, throttle levers) and keep the vehicle stable.

When the vehicle operator is "hands-off", the AFCS can guide the aircraft along the pre-determined flight plan provided by the FMS. This integrated functionality is sometimes called Autopilot (AP).

Thus, most control and monitoring devices for vehicles include different types of sensors and actuators as well as decision making systems that are interconnected and communicate with each other. Recently, control and monitoring devices for vehicles have emerged that interact with wearable devices.

Document US 9,804,595 B1 describes a control system for a vehicle using a primary three axis orientation sensor and a reference three axis orientation sensor spaced apart from the primary sensor. At least one auxiliary control can be used for thrust. A wearable processor can be configured to receive the primary sensor signal and the reference sensor signal. The reference sensor signal can use a conditioning formula and the wearable processor can filter the conditioned signals using a Kalman filter. The filtered signals can form merged signals and apply operator configurations on wrist reference locations to the merged signals. Operation commands can use the merged signals to control the vehicle with four channels of control to a transmitter that communicates with the vehicle.

The document EP 3 159 268 A1 describes a wearable device to be worn by an operator of an aircraft. The wearable device includes a communication unit that is configured to receive aircraft parameters from an aircraft system. The wearable device further includes a database configured to store adverse control rules that define at least a first adverse control associated with a first aircraft state. The wearable device further includes a first sensor to collect data associated with movement and/or location of the wearable device. The wearable device includes a processing unit configured to identify the first aircraft state based on the aircraft parameters, evaluate operator intent based on the movement and/or location of the wearable device, and initiate a first alert when the operator intent corresponds to the first adverse control during the first aircraft state. The wearable device includes a haptic unit configured to communicate the first alert to the operator.

The document EP 3 532 842 A1 describes a controller including a first control member, a second control member that extends from a portion of the first control member, and a third control member that moves in conjunction with, and in opposition to, a degree of freedom of the second control member. The third control member is configured to be operated by one or more of the non-index fingers of the user's hand. A controller processor is operable to produce a rotational movement output signal in response to movement of the first control member, and a translational movement output signal in response to movement of the second control member relative to the first control member. The first control member may be gripped and moved using a single hand, and the second control member may be moved using the thumb of the single hand. The third control member is configured to be operated by one or more of the non-index fingers of the user's hand, thus permitting intuitive, single-handed control of multiple degrees of freedom, to and including, all six degrees of rotational and translational freedom without any inadvertent cross-coupling inputs.

The document EP 3 553 654 A1 describes a system for facilitating communications between certified on-board avionics control functions and one or more uncertified remote client applications. The system includes an avionics data access function (ADAF), which acts as a multi-mode data acquisition agent for the onboard avionics control functions and serves the requests from the remote client applications. ADAF comprises a separate space- and time-partitioned module, which handles retrieving data from the onboard avionics and transmitting the data to the remote client application(s) in the appropriate format.

On-board of modern vehicles, a vehicle operator is faced with an increased workload, because the vehicle operator needs to permanently watch and assess relevant information on visual instruments. Furthermore, devices that create tactile cues that alert a vehicle operator in case of problems with the vehicle and/or the operation of the vehicle are expensive and dangerous in case of a malfunction. However, there is no communication between a control and monitoring device on-board the vehicle and a wearable device of a vehicle operator that includes the transmission of alert signals from the vehicle to the wearable device.

In particular, there is no communication between a control and monitoring device on-board the vehicle and a wearable device of a vehicle operator that includes the transmission of alert signals from the vehicle to the wearable device to create cues in order to alert the vehicle operator (110) about the deviation of the current usage from the planned usage or upon a detection of an exceedance of the current usage beyond the safe domain of usage of the vehicle.

Moreover, there is no automatic configuration or reconfiguration of the vehicle based on individual preferences of the vehicle operator or based on physiological or bio indicators of the vehicle operator's health or workload, which may be based on the transmission of status information from the wearable device to the vehicle.

Furthermore, there is no communication between a control and monitoring device on-board the vehicle and a wearable device of a second vehicle operator that includes the transmission of alert signals from the vehicle to the wearable device of the second vehicle operator to create cues related to the health of a first vehicle operator in order to alert the second vehicle operator that the first vehicle operator is not fit to safely operate the vehicle.

It is, therefore, an objective to provide a new control and monitoring device for a vehicle that communicates with a personalized wearable device of a vehicle operator and overcomes the above-described deficiencies of prior solutions. This objective is solved by a control and monitoring device having the features of claim 1.

More specifically, a control and monitoring device for a vehicle with a controllable device, wherein the vehicle is operated by a vehicle operator wearing a personalized wearable device, may comprise a wireless radio transmitter and receiver unit and a vehicle management system. The wireless radio transmitter and receiver unit may be adapted for communicating with the personalized wearable device of the vehicle operator. The vehicle management system may be adapted to send alert information to the personalized wearable device via the wireless radio transmitter and receiver unit and receive status information from the personalized wearable device via the wireless radio transmitter and receiver unit. The status information may comprise at least one of preferred workspace settings of the vehicle operator or health-related information about the vehicle operator. The vehicle management system controls the controllable device based on the at least one of the preferred workspace settings or the health-related information.

Illustratively, the vehicle operator may carry a personalized wearable device (e.g., a wrist watch) that is connected to the vehicle via a wireless data connection (e.g., a wireless radio data connection). Information may be exchanged between the vehicle and the personalized wearable device through the wireless data connection. If desired, information may be exchanged between a control and monitoring device that is installed in the vehicle and the personalized wearable device via the wireless data connection.

As an example, the control and monitoring device may identify the vehicle operator based on the exchanged information. As another example, the control and monitoring device may configure the vehicle based on individual preferences of the vehicle operator. For example, the control and monitoring device may initiate the adjustment of ergonomic settings (e.g., the position of seats and pedals, the adjustment of control forces, etc.) and/or the configuration of information that is displayed on a multi-function display (MFD).

As yet another example, the control and monitoring device may warn the vehicle operator and/or other vehicle operators that are also carrying respective personalized wearable devices via tactile cues (e.g., using vibrations through a haptic interface of the respective personalized wearable devices) about important events that concern the operational safety of the vehicle.

If desired, the personalized wearable device may assess the workload of the vehicle operator and/or health issues of the vehicle operator and transfer associated information to the vehicle. Illustratively, the control and monitoring device may reconfigure the vehicle for autonomous operation if the vehicle operator's workload exceeds a predetermined threshold and/or the vehicle operator's health deteriorates. If desired, the control and monitoring device may notify other vehicle operators that are also carrying respective personalized wearable devices and/or a remote surveillance station (e.g., air traffic control in case the vehicle is an aircraft) when the vehicle operator is facing a problematic situation.

Illustratively, the personalized wearable device is sufficiently small such that it does not bother the vehicle operator. Preferably, the personalized wearable device is embodied by a smartwatch that uses a standard wireless communication protocol.

If desired, the personalized wearable device can be used for the identification of the vehicle operator. The personalized wearable device may ensure the privacy of the vehicle operator. Therefore, the personalized wearable device may collect and save detailed personalized data of the vehicle operator only locally while sending status information about safety critical events to the vehicle.

Illustratively, the personalized wearable device is able to establish and maintain a wireless data connection. The personalized wearable device may provide a communication interface for communicating with the vehicle operator, if desired.

As an example, the personalized wearable device may provide a haptic interface. The haptic interface may include the capability of generating a vibration of the personalized wearable device.

As another example, the personalized wearable device may provide a display for simple messages such as items of a checklist.

Illustratively, the personalized wearable device may be able to assess physiological and/or bio indicators of the vehicle operator such as the vehicle operator's heart rate, electrocardiogram, sweating/electrical conductivity of the skin, body/skin temperature, blood oxygen saturation and/or blood pressure.

The interaction between the control and monitoring device on-board the vehicle and the personalized wearable device of the vehicle operator may provide for an increased security through an automatic identification and registration of the vehicle operator via the personalized wearable device and/or enable the automatic personalisation or individualisation of the vehicle's settings according to the preferences of the vehicle operator.

The tactile interface of the personalized wearable device may alert the vehicle operator through vibrations, i.e. mechanical oscillations. For example, the personalized wearable device may be worn on the skin (e.g., the wrist). As a result, the personalized wearable device may avoid any interference with other vehicle controls. In particular, there should be no risk of potential reinjection of vibrations into flight control commands via long pole sticks or side sticks.

The personalized wearable device may be configured to emit different types of alarms and notifications for different types of events. Thus, the personalized wearable device may avoid confusing the vehicle operator with ambiguous cues.

If desired, the personalized wearable device may generate cues to improve the situational awareness of the vehicle operator and/or reduce the workload of the vehicle operator.

The personalized wearable device may process and store data concerning the vehicle operator's personal physiological and/or bio information during the operation of the vehicle. If desired, the personalized wearable device may transfer the data concerning the vehicle operator's personal physiological and/or bio information to the control and monitoring device of the vehicle and/or to a remote surveillance station for the purpose of alarms when the personalized wearable device detects an excess of indicators that are relevant for workload and health.

According to one aspect, the controllable device comprises an adjustable workspace for the vehicle operator, wherein the status information comprises the preferred workspace settings, and wherein the vehicle management system directs adjustment of the adjustable workspace based on the preferred workspace settings.

According to one aspect, the adjustable workspace may include a pedal, a seat, and at least one motor, and the vehicle management system directs the motor to adjust a position of the pedals relative to the seat based on the preferred workspace settings.

According to one aspect, the adjustable workspace includes at least one display, and the vehicle management system directs configuration of the at least one display and selects the information displayed on the at least one display based on the preferred workspace settings.

According to one aspect, the status information may further include identifying information about the vehicle operator, and the vehicle management system may direct the controllable device to grant or deny the vehicle operator access to the vehicle based on the identifying information about the vehicle operator.

According to one aspect, the vehicle management system directs at least one of a vehicle operating system, a flight control computer, an automatic flight control system, or an autopilot to either accept and execute or refuse and ignore flight control inputs from the vehicle operator based on the status information from the personalized wearable device.

According to one aspect, the control and monitoring device further comprises a vehicle monitoring system that monitors the vehicle and sends associated monitored information about the vehicle to the vehicle management system, wherein the vehicle management system, assesses the associated monitored information from the vehicle monitoring system, and, upon a detection of a safety-critical event, directs the wireless radio transmitter and receiver unit to send the alert information to the personalized wearable device.

According to one aspect, the control and monitoring device further comprises a usage monitoring system that monitors a current usage of the vehicle and communicates the current usage to the vehicle management system, wherein the vehicle management system, compares the current usage from the usage monitoring system with a planned usage and a safe domain of usage of the vehicle, and, upon a detection of a deviation of the current usage from the planned usage or upon a detection of an exceedance of the current usage beyond the safe domain of usage of the vehicle directs the wireless radio transmitter and receiver unit to send the alert information to the personalized wearable device.

According to one aspect, the alert information causes the personalized wearable device to create cues in order to alert the vehicle operator about the deviation of the current usage from the planned usage or about the detection of the exceedance of the current usage beyond the safe domain of usage of the vehicle.

According to one aspect, the status information about the vehicle operator may include the health-related information, and the control and monitoring device may be further adapted to determine whether the vehicle operator is unfit for safely operating the vehicle based on at least one of the health-related information or a current workload of the vehicle operator.

According to one aspect, the vehicle management system directs a vehicle operating system to initiate autonomous operation of the vehicle in response to determining that the vehicle operator is unfit for safely operating the vehicle.

According to one aspect, the control and monitoring device further comprises a communication device, wherein the vehicle management system informs a remote surveillance station via the communication device that autonomous operation of the vehicle has been initiated in response to determining that the vehicle operator is unfit for safely operating the vehicle.

According to one aspect, the vehicle is further operated by an additional vehicle operator wearing an additional personalized wearable device, and the control and monitoring device may further include first and second radio frequency identification or wireless near field communication units. The first radio frequency identification or wireless near field communication unit is adapted for identifying and communicating with the personalized wearable device of the vehicle operator, and the second radio frequency identification or wireless near field communication unit is adapted for identifying and communicating with the additional personalized wearable device of the additional vehicle operator.

According to one aspect, the vehicle management system, in response to determining that the vehicle operator is unfit for safely operating the vehicle, directs the second radio frequency identification or wireless near field communication unit to send additional alert information to the additional personalized wearable device that causes the additional personalized wearable device to create cues in order to alert the additional vehicle operator to the fact that the vehicle operator is unfit for safely operating the vehicle.

Moreover, a vehicle may comprise the control and monitoring device described above.

Embodiments are outlined by way of example in the following description with reference to the attached drawings. In these attached drawings, identical or identically functioning components and elements are labeled with identical reference numbers and characters and are, consequently, only described once in the following description.
- Figure 1 is a diagram of an illustrative control and monitoring device for a vehicle with a controllable device and a vehicle operator who is approaching the vehicle and wearing a personalized wearable device in accordance with some embodiments,
- Figure 2 is a diagram of an illustrative control and monitoring device with a vehicle management system for a vehicle that receives information including preferred workspace settings from a personalized wearable device and directs adjustment of an adjustable workspace in the vehicle based on the preferred workspace settings in accordance with some embodiments,

- Figure 3 is a diagram of an illustrative portion of an adjustable workspace of a vehicle and two illustrative personalized wearable devices that communicate with respective radio frequency identification (RFID) or wireless near field communication (NFC) units in accordance with some embodiments,
- Figure 4 is a diagram of an illustrative control and monitoring device for a vehicle that directs a vehicle management system to create cues for the vehicle operator in accordance with some embodiments,
- Figure 5 is a diagram of an illustrative control and monitoring device for a vehicle that initiates autonomous operation of the vehicle and informs a remote surveillance station that autonomous operation of the vehicle has been initiated in response to determining that the vehicle operator is unfit for safely operating the vehicle in accordance with some embodiments,
- Figure 6 is a flowchart showing illustrative operations that a control and monitoring device performs based on status information from a personalized wearable device in accordance with some embodiments,
- Figure 7A is a flowchart showing illustrative operations that a control and monitoring device performs based on identifying information from a personalized wearable device in accordance with some embodiments,
- Figure 7B is a flowchart showing illustrative operations that a control and monitoring device performs based on preferred workspace settings from a personalized wearable device in accordance with some embodiments, and
- Figure 7C is a flowchart showing illustrative operations that a control and monitoring device performs based on health-related information about a vehicle operator from a personalized wearable device in accordance with some embodiments.

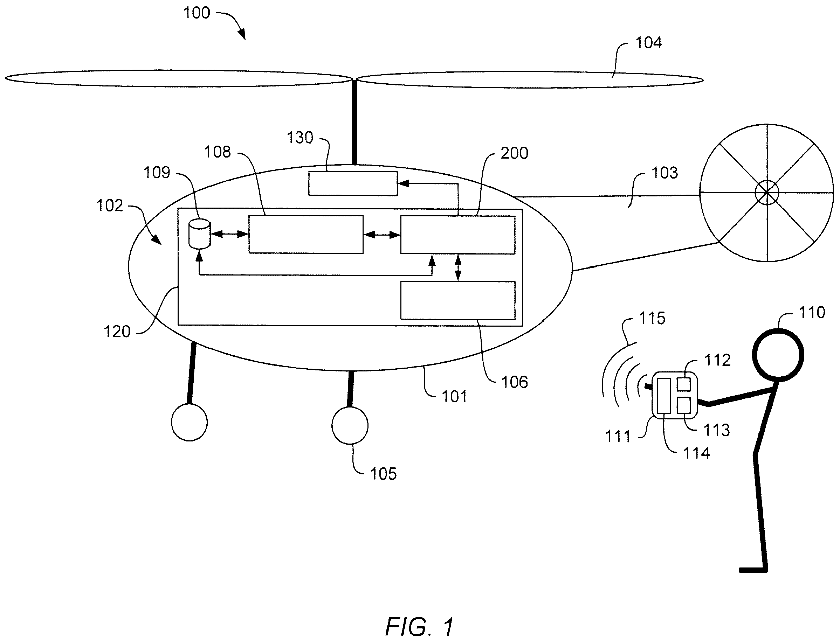

Figure 1 is a diagram of an illustrative control and monitoring device 120 for a vehicle 100 with a controllable device and a vehicle operator 110 who is approaching the vehicle 100 and wearing a personalized wearable device 111.

Vehicle 100 is exemplarily illustrated as an aircraft, in particular as a rotorcraft and, more particularly, as a helicopter. Thus, for purposes of simplicity and clarity, the vehicle 100 may be hereinafter referred to as the "helicopter" 100. The control and monitoring device 120 is, however, not limited for the use with helicopters and can likewise be used with any other vehicle, independent of a particular configuration thereof.

Vehicle 100 may be operated by a vehicle operator 110. If vehicle 100 is a helicopter or any other aircraft then vehicle operator 110 may be a pilot. Thus, for purposes of simplicity and clarity, the vehicle operator 110 may be hereinafter referred to as the "pilot" 110 if the vehicle is a helicopter or any other type of aircraft.

Pilot 110 may wear a personalized wearable device 111. In the scenario in which helicopter 100 has more than one pilot 110, each pilot 110 may have a personalized wearable device 111, if desired. The personalized wearable device 111 may include a processing unit 112, an identification unit 113, and a wireless communication unit 114.

The identification unit 113 is used to identify the vehicle driver 110 to the personalized wearable device 111 by individual or biometric characteristics. For instance, the identification unit may include a fingerprint sensor to identify the vehicle driver by his finger print.

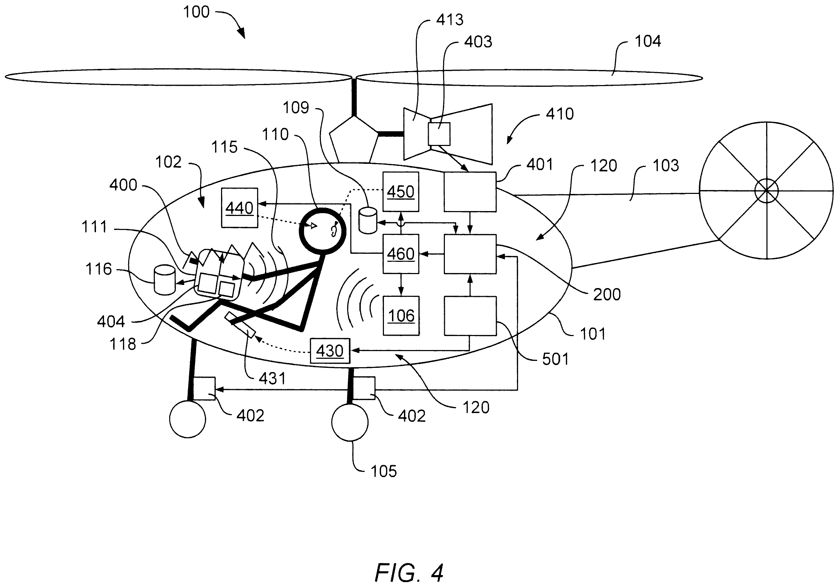

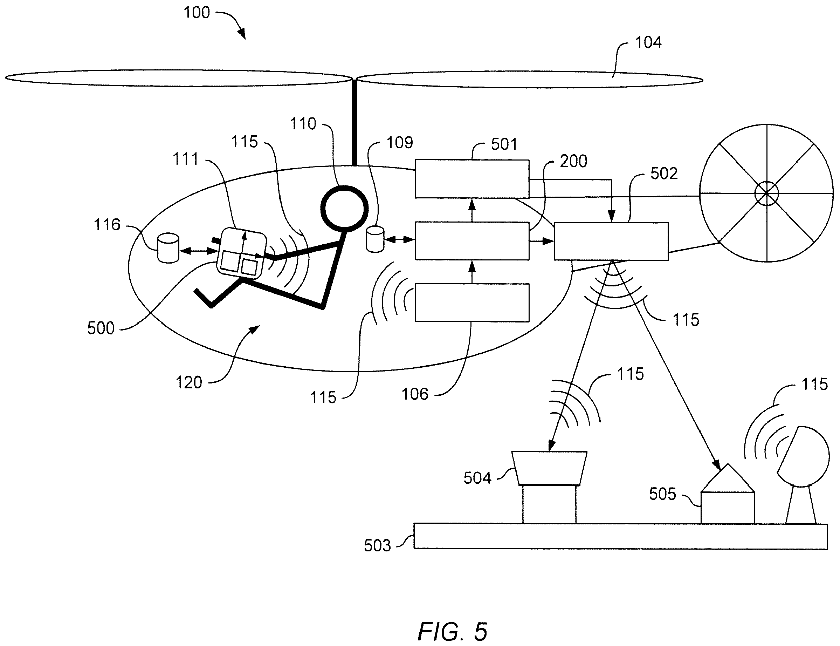

By way of example, personalized wearable device 111 may include a data storage unit (e.g., data storage unit 116 of Figures 4 and 5). The data storage unit may store status information. If desired, personalized wearable device 111 may be associated with an external data storage unit (e.g. data storage unit 109 of the control and monitoring device of the vehicle).

By way of example, personalized wearable device 111 may include a cue generation unit 118, e.g. the cue generation unit 118 of Figure 4.

By way of example, personalized wearable device 111 may include a display 404 according to Figure 4. The display 404 may be a touch screen to enable input from the vehicle driver to the wearable device.

By way of example, personalized wearable device 111 may include a health and workload sensor unit 500 according to Figure 5.

As an example, the status information may include preferred workspace settings of the vehicle operator 110. As another example, the status information may include health-related information about the vehicle operator 110. As yet another example, the status information may include preferred workspace settings of the vehicle operator 110 and health-related information about the vehicle operator 110.

Illustratively, the helicopter 100 comprises a fuselage 101 with a cabin 102 and a tail boom 103, which may comprise a vertical tail plane, a suitable counter-torque device, such as a tail rotor, which is configured to provide counter-torque during operation in order to balance the helicopter 100 in terms of yaw, a horizontal stabilizer, a bumper and so on.

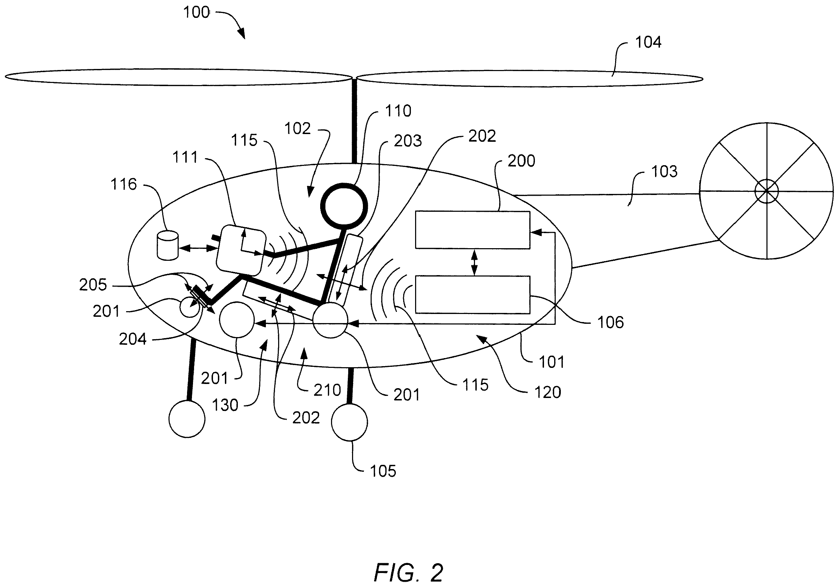

As shown in Figure 1, helicopter 100 may have a main rotor 104 with rotor blades that are mounted to a rotor mast. While the main rotor 104 may be controlled by the vehicle operator 110 with his hands via cyclic and collective sticks, the tail rotor may be controlled with his feet via pedals as shown in Figures 2 and 4. Helicopter 100 may include a landing gear 105 that is illustratively shown to be a wheel-type landing gear. However, any other type of landing gear such as a skid type landing gear may be used instead.

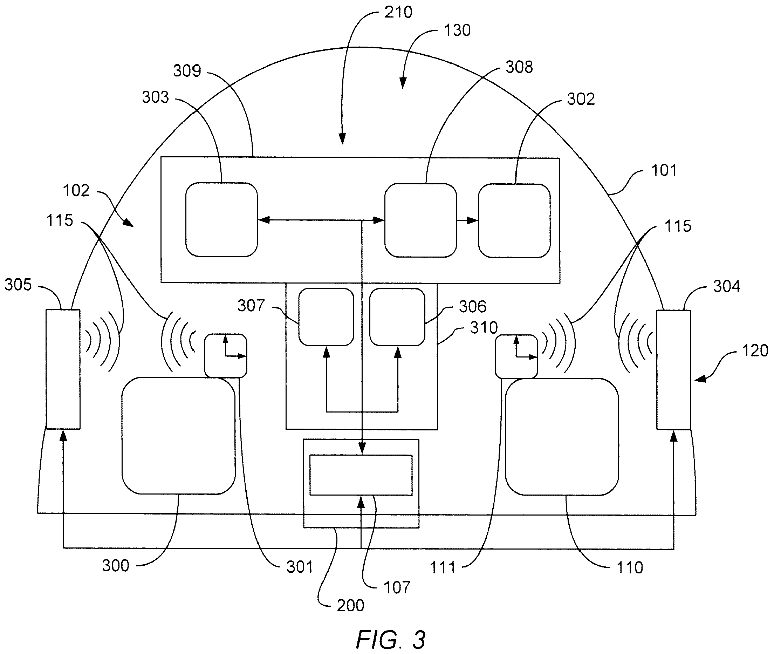

By way of example, vehicle 100 may include a controllable device 130. Controllable device 130 may be any device that is installed in vehicle 100 and that can be controlled to execute specific tasks. As an example, controllable device 130 may be an electric motor that may be controlled to adjust a workspace for the vehicle operator 110 as shown in Figure 2. As another example, controllable device 130 may be a display that may be configured for the vehicle operator 110 as shown in Figure 3.

Illustratively, control and monitoring device 120 may include a wireless radio transmitter and receiver unit 106. The wireless radio transmitter and receiver unit 106 may be adapted for communicating with the personalized wearable device 111 of the vehicle operator 110. For example, wireless radio transmitter and receiver unit 106 may be adapted for communicating with the wireless communication unit 114 of the personalized wearable device 111.

By way of example, control and monitoring device 120 may include a data storage unit 109. Data storage unit 109 may store data indicative of a safe operation of the vehicle 100.

Illustratively, control and monitoring device 120 may include a usage monitoring system 108. Usage monitoring system 108 may monitor a current usage of the vehicle 100.

Control and monitoring device 120 may include a vehicle management system 200. Vehicle management system (VMS) 200 may include any onboard system that manages the vehicle's internal capabilities to accomplish mission goals. Thus, vehicle management system 200 may provide several functions.

As an example, vehicle management system 200 may monitor sensors and collect general information about the vehicle 100. If desired, vehicle management system 200 may retrieve the data indicative of a safe operation of the vehicle 100 from the data storage unit 109 and compare the data with the associated general information about the vehicle 100 to detect any safety-critical event. Vehicle management system 200 may generate alert information based on a detected safety-critical event, if desired.

As another example, usage monitoring system 108 may communicate the current usage of the vehicle 100 to the vehicle management system 200. The vehicle management system 200 may compare the current usage from the usage monitoring system 108 with a planned usage and a safe domain of usage of the vehicle 100, e.g. the certified flight domain including attitude, altitude, air speed, etc. for given outside air temperature (OAT), air density, loading condition, etc.

Upon a detection of a deviation of the current usage from the planned usage or upon a detection of an exceedance of the current usage beyond the safe domain of usage, the vehicle management system 200 may generate alert information based on the deviation of the current usage from the planned usage or based on the exceedance of the current usage beyond the safe domain of usage of the vehicle 100, if desired.

Vehicle management system 200 may be adapted to send the alert information via the wireless radio transmitter and receiver unit 106 to the personalized wearable device 111. In other words, vehicle management system 200 may direct the wireless radio transmitter and receiver unit 106 to send a signal 115 that includes the alert information to the personalized wearable device 111.

In response to receiving the alert information from the vehicle management system 200, the personalized wearable device 111 may create cues for the vehicle operator 110. The cues may be based on the alert information with the goal of quickly informing the vehicle operator 110 of the nature of the problem for which the alert information was issued. For example, each problem may be associated with a different cue.

The personalized wearable device 111 may create different types of cues by means of different cue generation units 118. As an example, the personalized wearable device 111 may create haptic cues such as vibrations, i.e. mechanical oscillations. The vibrations may be a sequence of vibrations of different lengths, frequency and/or intensity/amplitude such that every problem for which the alert information was issued is asociated with a different characteristic sequence of vibrations.

As another example, the personalized wearable device 111 may create haptic cues based on mechanical stimulation like vibrations or local mechanical pressure on the skin, electrical stimulation of the skin, or thermal stimulation of the skin of the vehicle operator 110.

As another example, the personalized wearable device 111 may create visual cues such as flashes on a screen, blinking lights, or any other visual cues. The visual cues may be a sequence of flashes of different lengths and/or color such that every problem for which the alert information was issued is asociated with a different visual cue. If desired, the visual cues may be a message on a display.

As yet another example, the personalized wearable device 111 may create aural cues such as alarms sounds, beeps, or clear voice announcements. The aural cues may be a sequence of alarm sounds or beeps of different lengths, frequency, and/or loudness/volume such that every problem for which the alert information was issued is asociated with a different aural cue.

If desired, the personalized wearable device 111 may create any combination of haptic cues and/or visual cues and/or aural cues.

Illustratively, vehicle management system 200 may be adapted to receive status information from the personalized wearable device 111 via the wireless radio transmitter and receiver unit 106. For example, personalized wearable device 111 may send a signal 115 that includes status information of the vehicle operator 110 via wireless communication unit 114 and wireless radio transmitter and receiver unit 106 to vehicle management system 200.

By way of example, the status information may include identifying information about the vehicle operator 110. If desired, the vehicle management system 200 may direct the controllable device 130 to grant or deny the vehicle operator 110 access to the vehicle 100 based on the identifying information about the vehicle operator 110. For example, the controllable device 130 may direct electric motors to unlock or lock the doors of vehicle 100 to grant or deny physical access to the vehicle 110.

Illustratively, vehicle management system 200 may grant or deny access to operational commands of the vehicle. In the scenario in which the vehicle 100 is an aircraft, vehicle management system 200 may grant or deny access to the avionics system and/or allow to operate the aircraft by command inputs and/or perform a pre-flight check of the aircraft.

Illustratively, vehicle management system 200 may grant or deny access to data 109 stored in the vehicle 100.

Vehicle 100 may be operated by different types of vehicle operators 110. For example, in case of an aircraft, vehicle 100 may be operated by maintenance personnel, by cabin crew, or by one or more pilots, just to name a few. If desired, the vehicle management system 200 may grant or deny access to certain data of data 109 based on the type of vehicle operator 110.

Illustratively, different identifying information may be associated with different types of vehicle operators 110. For example, the vehicle management system 200 may accept or ignore operational command inputs and grant or deny the vehicle operator 110 different types of access rights to data stored in the vehicle, e.g. read only access, write access, etc.

Illustratively, based on the identifying information of a vehicle operator 110 who is registered as maintenance personnel but not as a pilot cleared for flight, the vehicle management system 200 may grant read access to data 109 stored in the vehicle 100 for maintenance purposes but ignore operational command inputs and deny write access to any data 109 stored in the vehicle 100 that is relevant during flight.

Consider the scenario in which the status information includes at least one of preferred workspace settings of the vehicle operator 110 or health-related information about the vehicle operator 110. In this scenario, the vehicle management system 200 may control the controllable device 130 based on the at least one of the preferred workspace settings or the health-related information.

Figure 2 is a diagram of an illustrative control and monitoring device 120 with a vehicle management system 200 for a vehicle 100. Vehicle 100 may have a controllable device 130 that includes an adjustable workspace 210.

Vehicle management system 200 may receive status information from a personalized wearable device 111. For example, the personalized wearable device 111 may include a data storage unit 116. Data storage unit 116 may store status information of the vehicle operator 110.

Personalized wearable device 111 may be associated with a vehicle operator 110. Illustratively, the status information may include preferred workspace settings of the vehicle operator 110. In response to receiving the preferred workspace settings, vehicle management system 200 may direct adjustment of the adjustable workspace 210 in the vehicle 100 based on the preferred workspace settings.

If desired, vehicle management system 200 may direct adjustment of the adjustable workspace 210 as soon as the vehicle operator 110 has been identified and/or has registered with the vehicle management system 200 based on the status information.

Illustratively, the adjustable workspace 210 may include pedals 204 or any other device that the vehicle operator controls with the feet when operating the vehicle, a seat 203 or a stool or a back rest or an arm rest as part of the seat 203 or any other device that the vehicle operator rests on when operating the vehicle 100, at least one display, one or more rearview mirrors, or any other device that the vehicle operator 110 observes when operating the vehicle 100, speakers, headsets, or any other device that the vehicle operator 110 listens to when operating the vehicle, handles, cyclic center stick or side sticks and collective sticks, or any other device that the vehicle operator controls with the hands when operating the vehicle, etc.

By way of example, pedals 204, handles, displays, or any other device within the adjustable workspace 210 may be associated with seat 203 or any other device that the vehicle operator rests on when operating the vehicle.

At least some devices of the adjustable workspace 210 may be adjustable. For example, pedals 204 and/or seat 203 may be adjustable. Pedals 204 and/or seat 203 may have one or more adjustable setting.

As an example, the adjustable settings of the seat 203 may include the inclination of the back rest of the seat 203, the height of the back rest of the seat 203, the height and/or advancement of an optional head rest of the seat 203, the inclination of the seat surface of the seat 203, the height of the seat surface of the seat 203, the advancement of the seat 203 relative to any controls, the height and/or advancement of an optional arm rest of the seat 203, etc.

Illustratively, the height of the seat surface of seat 203 (e.g., from the floor) may be adjusted for a correct line of sight of the vehicle operator 110 by accommodating and adapting to the height of the vehicle operator's 110 upper body. Illustratively, the height of the seat surface of seat 203 may be adjusted such that the vehicle operator 110 has a desired view at the instrument panel and through the windows of the vehicle 100.

By way of example, the position of the seat surface of seat 203 in flight direction or the inclination of the back rest of seat 203 may be adjusted such that the vehicle operator 110 may easily reach all the instruments and commands (e.g., instrument panels, switch buttons, knobs, touchscreens, etc.) by accommodating and adapting to the length of the vehicle operator's 110 arms.

As another example, the adjustable settings of the pedals 204 may include the position of the pedals 204 relative to the seat 203 in order to accommodate the length of the legs of the vehicle operator 110, the distance of the pedals 204 from each other, the protrusion of the individual pedals 204 from the floor, etc.

Pedals 204 and/or seat 203 may be adjustable by a motor 201. Motor 201 may be an electric motor. A separate motor 201 may be associated with each different adjustable setting. If desired, one motor 201 may perform more than one adjustable setting (e.g., via a gearbox or screw-nut mechanism).

Vehicle management system 200 may direct the motor 201 to adjust a position of the pedals 204 relative to the seat 203 based on the preferred workspace settings. For example, vehicle management system 200 may direct motor 201 to perform a movement 205 of the pedals 204, thereby adjusting the protrusion of the pedals 204 from the floor, i.e. the vertical distance of the pedals 204 from seat 203, and/or the advancement of the pedals 204, i.e., the horizontal distance of the pedals 294 from the seat 203 in order to accommodate the length of the legs of the vehicle operator.

Vehicle management system 200 may direct the motor 201 to adjust a position of the seat 203 based on the preferred workspace settings. For example, vehicle management system 200 may direct motor 201 to perform a movement 202 of the seat 203, thereby adjusting the back rest, the head rest, and/or the seat surface of the seat 203.

Illustratively, adjustable workspace 210 may include adjustable handles or grips 431 and vehicle management system 200 may direct motor 201 to adjust a position of the handles. For example, motor 210 may adjust the position of the handles relative to the seat 203.

Illustratively, adjustable workspace 210 may include adjustable arm rests and vehicle management system 200 may direct motor 201 to adjust a position of the arm rest. For example, motor 210 may adjust the position of the arm rest relative to the seat 203 and/or cyclic center stick or side sticks and collective stick that the vehicle operator uses to operate the vehicle in order to accommodate the size of the body, length of the arms, the hand and fingers of the vehicle operator.

In case of more than one vehicle operator: individual settings for each vehicle operator, i.e. for each vehicle operator the individual settings can be adjusted independently based on the preferred settings stored in the corresponding personalized wearable device of each individual vehicle operator.

If desired, adjustable workspace 210 may include at least one display. Figure 3 is a diagram of an illustrative portion of an adjustable workspace 210 of a vehicle (e.g., helicopter 100 of Figure 1).

As shown, the vehicle may provide at least two workspaces, a first workspace for vehicle operator 110 and a second workspace for vehicle operator 300. Each vehicle operator 110, 300 may have a personalized wearable device 111, 301. For example, vehicle operator 110 may have personalized wearable device 111, and vehicle operator 300 may have personalized wearable device 301.

If desired, the vehicle may provide only one workspace or more than two workspaces. A vehicle operator may be associated with each workspace, and each vehicle operator may be associated with a personalized wearable device.

Each workspace may include a radio frequency identification (RFID) or wireless near field communication (NFC) unit 304, 305. For example, the first workspace may have RFID or wireless NFC unit 304 that is used to identify the personalized wearable device 111 of the vehicle operator 110, and the second workspace may have RFID or wireless NFC unit 305 that is used to identify the personalized wearable device 301 of the second vehicle operator 300.

As a preferred embodiment, the respective RFID or wireless NFC unit 304, 305 may have a range that is limited to the respective first and second workspaces. In other words, RFID or wireless NFC unit 304 cannot communicate with personalized wearable device 301 that is located in the second workspace, and the RFID or wireless NFC unit 305 cannot communicate with personalized wearable device 111 that is located in the first workspace. By limiting the range of the first and second RFID or wireless NFC unit 304, 305 to the corresponding first and second workspace dedicated to the first and second vehicle operator, it is assured that the personalized wearable devices 111, 301 of the first and second vehicle operators 110, 300 can be safely distinguished without ambiguity or the risk of confusion.

Illustratively, the RFID or wireless NFC unit 304 may receive status information that includes preferred workspace settings of vehicle operator 110 from personalized wearable device 111, and RFID or wireless NFC unit 305 may receive status information that includes preferred workspace settings of vehicle operator 300 from personalized wearable device 301.

As an alternative, the wireless radio transmitter and receiver unit 106 may receive status information that includes preferred workspace settings of both vehicle operator 110 from personalized wearable device 111, and of vehicle operator 300 from personalized wearable device 301 after the individualized wearable devices have each been initially identified by RFID / NFC.

As shown in Figure 3, the portion of the adjustable workspace may include displays 302, 303, 306, 307, and 308. If desired, the displays 302, 303, 306, 307, 308 may be arranged on at least two different instrument panels or consoles 309, 310. For example, displays 302, 303, and 308 may be arranged on the main instrument panel 309, while displays 306 and 307 are arranged on the center console 310. In a preferred embodiment, the at least two different instrument panels or consoles 309, 310 could have different size, position, spatial orientation and accessibility towards the vehicle operator.

However, it should be noted that any number of displays can be arranged on any number of screens if desired for a certain vehicle configuration. As an example, each display may be arranged on a separate screen. As another example, all displays may be arranged on a single screen.

Illustratively, vehicle management system 200 may be adapted to receive status information from the respective personalized wearable devices 111, 301 via the respective RFID or wireless Near Field Communication (NFC) unit 304, 305. Vehicle management system 200 may distinguish between first status information received from personalized wearable device 111 via RFID or wireless Near Field Communication (NFC) unit 304 and second status information received from personalized wearable device 301 via RFID or wireless Near Field Communication (NFC) unit 305.

First status information may include first preferred workspace settings of vehicle operator 110, while second status information may include second preferred workspace settings of vehicle operator 300.

Vehicle management system 200 may include a display controller 107. Vehicle management system may, through display controller 107, direct configuration of the displays that are associated with the first workspace of vehicle operator 110 (e.g., displays 302, 306, 308) according to the first preferred workspace settings and configuration of the displays that are associated with the second workspace of vehicle operator 300 (e.g., displays 303, 307) according to the second preferred workspace settings.

As an example, vehicle management system 200 may determine the visual design of the different displays by selecting the brightness, contrast, luminance, color, and/or size of the different displays based on the preferred workspace settings. As another example, vehicle management system 200 may select the information displayed on the respective displays based on the preferred workspace settings, e.g. navigation map data, vehicle configuration or information dedicated to different systems like fuel system, hydraulic system, external cameras etc. As yet another example, vehicle management system 200 may determine the arrangement of the information on the respective displays based on the preferred workspace settings.

Figure 4 is a diagram of an illustrative control and monitoring device 120 for a vehicle 100 that directs a vehicle management system 200 to create cues 400 for the vehicle operator 110 in accordance with some embodiments.

Illustratively, control and monitoring device 120 may include a vehicle monitoring system 410. Vehicle monitoring system 410 may monitor the vehicle 100. For example, the vehicle monitoring system 410 may include at least one sensor 402, 403.

Illustratively, the vehicle monitoring system 410 may monitor installed equipment in vehicle 100 and the use of the equipment. For example, if vehicle 100 is an aircraft, vehicle monitoring system 410 may monitor engines 413, gearbox limitations, limits of structural loads, fuel level, the status of the landing gear, hydraulics, avionics, air data (e.g., speed, altitude, etc.), navigational data (e.g., position, course, etc.), operation of the aircraft (e.g., air speed with landing gear extended or external installations such as loads in place), or the environment of the aircraft (e.g., other air traffic, etc.), just to name a few.

Consider the scenario in which sensor 403 monitors the engine of vehicle 100. For example, sensor 403 may monitor the temperature of the engine 413, the oil pressure, or the revolutions per minute of the engine, just to name a few. In this scenario, sensor 403 may send the associated monitored information about the engine to engine control unit 401, which may process and/or forward the information to vehicle management system 200.

Vehicle management system 200 may assess the associated monitored information from the vehicle monitoring system 410. For example, the control and monitoring device 120 may include a data storage unit 109 that stores data indicative of a safe operation of the vehicle 100 (e.g., a safe engine temperature, or a safe oil pressure, sufficient fuel reserve, just to name a few).

Vehicle management system 200 may retrieve the data indicative of a safe operation of the vehicle 100 from the data storage unit 109 and compare the retrieved data with the associated information from the engine control unit 401 to detect any safety-critical event.

Illustratively, the control and monitoring device 120 may include a usage monitoring system (e.g., usage monitoring system 108 of Figure 1). The usage monitoring system may monitor a current usage of the vehicle 100 and communicate the current usage to the vehicle management system 200. The vehicle management system 200 may compare the current usage from the usage monitoring system with a planned usage and a safe domain of usage of the vehicle 100 to detect a deviation of the current usage from the planned usage or to detect an exceedance of the current usage beyond the safe domain of usage of the vehicle 100.

Upon a detection of a safety-critical event, upon a detection of a deviation of the current usage from the planned usage, or upon a detection of an exceedance of the current usage beyond the safe domain of usage of the vehicle, vehicle management system 200 may generate associated alert information.

If desired, vehicle management system 200 may register all alert information in a log book. The log book may be stored in data storage unit 109 as part of the vehicle 100 and/or in data storage unit 116 as part of the personalized wearable device 111.

Vehicle management system 200 may alert the vehicle operator 110 of the occurrence of the event that triggered the generation of the alert information. For example, vehicle management system 200 may via a vehicle operating system 501 direct a vibrating device 430 to provide tactile cues 430 (e.g., via flight control interceptors, handles or the grip of the cyclic or collective sticks 431), via a channel selector 460 direct a display 440 or other visual instruments to provide visual cues 406 (e.g., in the form of alert information or flashing or blinking lights or messages), and/or via the channel selector 460 direct one or more speakers 450 or headphones to provide aural cues 407 (e.g., in the form of alert messages or sounds) to the vehicle operator 110.

Illustratively, vehicle management system 200 may via the channel selector 460 direct the wireless radio transmitter and receiver unit 106 to send the alert information to the personalized wearable device 111 of vehicle operator 110. By way of example, personalized wearable device 111 may include or be associated with data storage unit 116. Data storage unit 116 may store all received alert information in data storage unit 116, if desired.

Personalized wearable device 111 may provide cues 400 to the vehicle operator 110. For example, based on the alert information that the vehicle management system 200 sends to the personalized wearable device 111 via the channel selector 460 and the wireless radio transmitter and receiver unit 106, the personalized wearable device 111 may provide cues 400 in form of tactile cues (e.g., mechanical stimulation like vibrations or local mechanical pressure on the skin, electric stimulation of the skin, thermal stimulation of the skin, etc.), visual cues (e.g., flashing of display 404, a text message on the display, etc.) and/or aural cues (e.g., sounding of an alarm, announcement of the safety-critical event, etc.), or any combination thereof.

Generating cues with the personalized wearable device 111 in addition to the cues provided by the vehicle 100 increases the number of communication channels between the vehicle 100 and the vehicle operator 110 and improves the situational awareness of the vehicle operator 110.

A different characteristic cue may be provided for each associated different problem for which an alert information was issued. Thereby, ambiguity between cues and different problems may be avoided and the vehicle operator 110 may easily identify the source of the problem based on the cue characteristics.

In particular, different channels of perception can be used to distinguish between messages of different criticality, e.g. "nice to have" information may be separated from safety related alerts that require immediate action of the vehicle operator 110 to ensure the safety or integrity of the vehicle 100 based on the channel of perception used by the cue characteristics.

Illustratively, the vehicle management system 200 may communicate alerts related to flight control inputs of the vehicle operator via tactile cue device 430 linked to a flight control inceptor of the vehicle 431, e.g. cyclic, collective sticks or pedals. As an example, the tactile cue device 430 may create soft or hard stops of the pilot force feel on short or long pole sticks, sidesticks, pedals or throttle levers 431.

In a preferred embodiment, alerts not related to flight control inputs could be communicated to the vehicle operator via cues of the personalized wearable device 111 in order to avoid interference with flight control inputs.

Illustratively, personalized wearable device 111 may monitor the health status and workload of vehicle operator 110. If desired, personalized wearable device 111 may capture health-related information about the vehicle operator 110 and store the health-related information in data storage unit 116.

For example, personalized wearable device 111 may be able to assess physiological and/or bio indicators of the vehicle operator 110 such as the vehicle operator's heart rate, electrocardiogram, sweating/electrical conductivity of the skin, body/skin temperature, blood oxygen saturation, blood pressure, etc.

Personalized wearable device 111 may send health-related information about the vehicle operator 110 together with other status information to the control and monitoring device 120. If desired, personalized wearable device 111 may only send health-related information about the vehicle operator 110 to the control and monitoring device 120 when the vehicle operator 110 is unfit for operating vehicle 100.

The assessment whether the vehicle operator 110 is unfit for operating vehicle 100 may be made by the personalized wearable device 111 and/or the control and monitoring device 120 based on the health-related information. In response to determining that the vehicle operator 110 is unfit for operating vehicle 100, control and monitoring device 120 may initiate autonomous operation of the vehicle 100.

Figure 5 is a diagram of an illustrative control and monitoring device 120 for a vehicle 100 that initiates autonomous operation of the vehicle 100. For example, personalized wearable device 111 may include a workload and health sensor 500. Personalized wearable device 111 may send signals 115 with status information via wireless radio transmitter and receiver unit 106 to vehicle management system 200 of control and monitoring device 120.

Illustratively, the status information that the vehicle management system 200 of the control and monitoring device 120 receives via the wireless radio transmitter and receiver unit 106 from the personalized wearable device 111 may include health-related information and/or a current workload of the vehicle operator 110.

If desired, the control and monitoring device 120 may be adapted to determine whether the vehicle operator 110 is unfit for safely operating the vehicle 100 based on at least one of the health-related information or the current workload of the vehicle operator 110. In response to determining that the vehicle operator 110 is unfit for safely operating vehicle 100, the vehicle management system 200 may direct a vehicle operating system 501 to initiate autonomous operation of the vehicle 100.

If desired, vehicle management system 200 may ignore command inputs from the vehicle operator 110 and refuse any modifications of avionics data or changes in settings initiated by the vehicle operator 110 in response to determining that the vehicle operator 110 is unfit for safely operating vehicle 100.

Control and monitoring device 120 may inform a remote surveillance station 504, 505 that autonomous operation of the vehicle 100 has been initiated. As an example, consider the scenario in which the vehicle 100 is an aircraft and the vehicle operating system an automatic flight control system (AFCS). In this scenario, control and monitoring device 120 may include a communication device 502, and the vehicle management system 200 may inform a control tower 504 and/or an air traffic control 505 on the ground 503 via the communication device 502 that the automatic flight control system (AFCS) 501 of the aircraft 100 has taken over control of the aircraft 100 in response to determining that the vehicle operator 110 is unfit for safely operating the vehicle 100.

As another example, consider the scenario in which the vehicle 100 is operated by vehicle operator 110 and an additional vehicle operator (e.g., additional vehicle operator 300 of Figure 3) wearing an additional personalized wearable device (e.g., additional personalized wearable device 301 of Figure 3) is on-board vehicle 100. Consider further that the control and monitoring device 120 includes first and second wireless NFC units (e.g., RFID or wireless NFC units 304, 305 of Figure 3). The first RFID or wireless NFC unit may be adapted for identifying and communicating with the personalized wearable device 111 of the vehicle operator 110, and the second RFID or wireless NFC unit may be adapted for identifying and communicating with the additional personalized wearable device of the additional vehicle operator.

For the purpose of identification, RFID or wireless NFC need to correctly identify the respective wearable devices 111, 301 of the respective vehicle operators 110, 300 without ambiguity. RFID or wireless NFC units 304, 305 may, thanks to the limited range of the wireless communication, correctly allocate the respective wearable devices 111, 301 to the right and left seat.

In this scenario, the vehicle management system 200, in response to determining that the vehicle operator 110 is unfit for safely operating the vehicle 100, may direct the second wireless limited range communication unit to send additional alert information to the additional personalized wearable device. The additional alert information may cause the additional personalized wearable device to create cues in order to alert the additional vehicle operator to the fact that the vehicle operator 110 is unfit for safely operating the vehicle 100.

For example, the additional wearable device may vibrate to draw the attention of the additional vehicle operator 300 to the fact that the vehicle operator 110 is unfit for safely operating the vehicle 100.

In case of two vehicle operators 110, 300, the vehicle management system 200 may ignore the command inputs by the vehicle operator who is unfit to operate the vehicle 100 and only consider and follow command inputs by the other vehicle operator as long as the other vehicle operator remains healthy and fit to operate the vehicle 100.

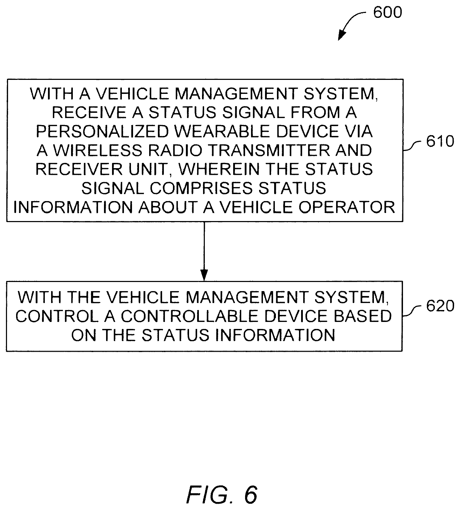

Figure 6 is a flowchart 600 showing illustrative operations that a control and monitoring device may perform based on status information from a personalized wearable device in accordance with some embodiments.

During operation 610, the control and monitoring device may, with a vehicle management system, receive a status signal from a personalized wearable device via a wireless radio transmitter and receiver unit, wherein the status signal comprises status information about a vehicle operator.

For example, vehicle management system 200 of Figure 2 may receive signals 115 with status information about vehicle operator 110 from the personalized wearable device 111 via the wireless radio transmitter and receiver unit 106. If desired, the status information may include at least one of preferred workspace settings of the vehicle operator 110 or health-related information about the vehicle operator 110.

During operation 620, the control and monitoring device may, with the vehicle management system, control a controllable device based on the status information.

For example, the status information may include preferred workspace settings of the vehicle operator 110 of Figure 2 and the vehicle management system 200 may control a controllable device 130 (e.g., motor 201) based on the preferred workspace settings to adjust a position of pedals 204.

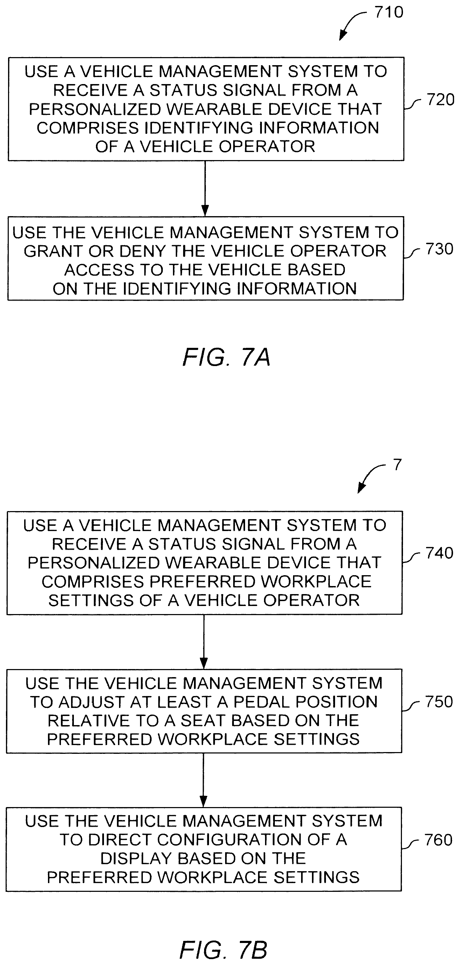

Figure 7A is a flowchart 710 showing illustrative operations that a control and monitoring device may perform based on identifying information from a personalized wearable device in accordance with some embodiments.

During operation 720, the control and monitoring device may use a vehicle management system to receive a status signal from a personalized wearable device that comprises identifying information of a vehicle operator.

For example, control and monitoring device 120 of Figure 1 may use vehicle management system 200 to receive a status signal via wireless radio transmitter and receiver unit 106 from personalized wearable device 111. The status signal may include identifying information of vehicle operator 110.

During operation 730, the control and monitoring device may use the vehicle management system to grant or deny the vehicle operator access to the vehicle based on the identifying information.

Illustratively, during operation 730, the control and monitoring device may use the vehicle management system to grant or deny the vehicle operator physical access to the vehicle.

For example, control and monitoring device 120 of Figure 1 may use vehicle management system 200 to grant or deny the vehicle operator 110 physical access to vehicle 100 (e.g., by locking or unlocking vehicle doors) based on the identifying information that the vehicle management system 200 has received from personalized wearable device 111.

Illustratively, during operation 730, the control and monitoring device may use the vehicle management system to grant or deny the vehicle operator access to the vehicle systems such as avionics system, maintenance system, health and usage monitoring system (HUMS), flight management system (FMS) or flight control system (FCS) based on the identifying information.

Illustratively, based on the identifying information of the vehicle operator, the control and monitoring device may use the vehicle management system to grant or deny the vehicle operator the right to read data, in particular to read vehicle settings, to read maintenance data, and/or to read usage data from the HUMS.

For example, if the vehicle operator based on his identifying information is correctly identified as maintenance personnel, he could be granted access to read data.

In addition, based on the identifying information of vehicle operator, the control and monitoring device may use the vehicle management system to accept or refuse command inputs from the vehicle operator.

As an example, the control and monitoring device may use the vehicle management system to command the avionics system to accept or refuse that the vehicle operator changes vehicle settings.

As another example, the control and monitoring device may use the vehicle management system to command the flight management system (FMS) to accept or refuse that the vehicle operator changes flight management data, flight planning data, or navigation data.

As yet another example, the control and monitoring device may use the vehicle management system to command the flight control computer (FCC), the automatic flight control system (AFCS), the autopilot (AP), and the engine control system to refuse and ignore any flight control inputs by the vehicle operator.

Illustratively, flight control computers (FCC) are employed to compute the flight laws and control the flight control servos and actuators of fly-by-wire (FbW) aircraft.

By way of example, the automatic flight control system (AFCS), autopilot (AP), and engine control system compute the flight laws and control the flight control servos and actuators of the aircraft via classical mechanical flight control kinematics.

Illustratively, if the vehicle operator based on his identifying information is correctly identified as an authorized vehicle operator, he would be granted access to enter command inputs, in particular to change vehicle settings in the avionics system, to change flight management data, flight planning data or navigation data in the flight management system (FMS), and to accept and execute all flight control inputs by the pilot in the flight control computer (FCC), the automatic flight control system (AFCS), the autopilot (AP), and the engine control system.

If desired, in addition to the correct identifying information of the vehicle operator, the vehicle operator's command inputs could still be refused and ignored during if the vehicle operator is considered unfit for safely operating the vehicle based on the health-related information received from the personalized wearable device 301.

Figure 7B is a flowchart 715 showing illustrative operations that a control and monitoring device may perform based on preferred workspace settings from a personalized wearable device in accordance with some embodiments.

During operation 740, the control and monitoring device may use a vehicle management system to receive a status signal from a personalized wearable device that comprises preferred workspace settings of a vehicle operator.

For example, control and monitoring device 120 of Figure 2 may use vehicle management system 200 to receive a status signal 115 from personalized wearable device 111 via wireless radio transmitter and receiver unit 106. If desired, the status signal 115 may include status information, whereby the status information comprises preferred workspace settings of vehicle operator 110.

During operation 750, the control and monitoring device may use the vehicle management system to adjust at least a pedal position relative to a seat based on the preferred workspace settings.

For example, control and monitoring device 120 of Figure 2 may use vehicle management system 200 to adjust the position of pedals 204 by moving the pedals 205 with motor 201 relative to seat 203 based on the preferred workspace settings. For example, motor 201 may adjust the protrusion of the pedals 204 from the floor and/or the advancement of the pedals 204 relative to the seat 203.

During operation 760, the control and monitoring device may use the vehicle management system to direct configuration of a display based on the preferred workspace settings.

For example, control and monitoring device 120 of Figure 3 may use vehicle management system 200, and more particularly, display controller 107 in vehicle management system 200 to direct configuration of displays 302, 303, 306, 307, 308 based on the preferred workspace settings.

As an example, vehicle management system 200 may determine the visual design of the different displays by selecting the brightness, contrast, color, and/or size of the different displays based on the preferred workspace settings. As another example, vehicle management system 200 may select the information displayed on the respective displays based on the preferred workspace settings. As yet another example, vehicle management system 200 may determine the arrangement of the information on the respective displays based on the preferred workspace settings.

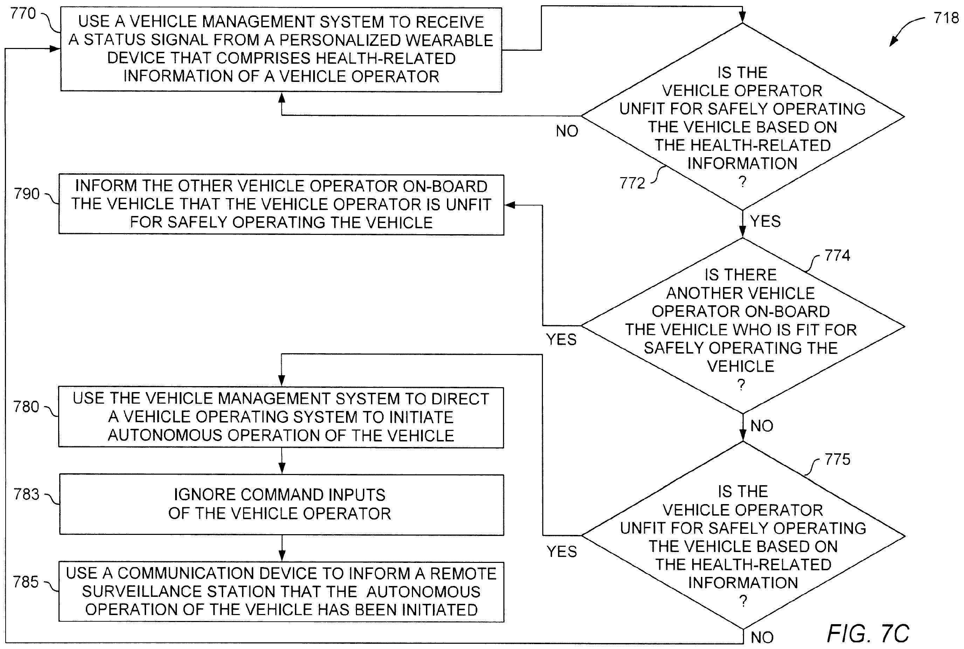

Figure 7C is a flowchart 718 showing illustrative operations that a control and monitoring device may perform based on health-related information about a vehicle operator from a personalized wearable device in accordance with some embodiments.

During operation 770, the control and monitoring device may use the vehicle management system to receive a status signal from a personalized wearable device that comprises health-related information of a vehicle operator.

For example, control and monitoring device 120 of Figure 5 may use vehicle management system 200 to receive a status signal 115 from personalized wearable device 111. If desired, the status signal may include health-related information of vehicle operator 110.

During operation 772, the control and monitoring device may evaluate whether the vehicle operator is unfit for safely operating the vehicle based on the health-related information.

For example, control and monitoring device 120 of Figure 5 may evaluate whether vehicle operator 110 is unfit for safely operating vehicle 100 based on the health-related information received from personalized wearable device 111.

In response to determining that the vehicle operator is not unfit for safely operating the vehicle based on the health-related information, the control and monitoring device may return to performing operation 770.

In response to determining that the vehicle operator is unfit for safely operating the vehicle based on the health-related information, the control and monitoring device may evaluate during operation 774 whether there is another vehicle operator on-board the vehicle who is fit for safely operating the vehicle.

For example, control and monitoring device 120 of Figure 5 may evaluate whether there is another vehicle operator such as vehicle operator 300 of Figure 3 on-board vehicle 100 and whether the other vehicle operator 300 is fit for safely operating vehicle 100.

For example, operation 774 may similar to operation 772 evaluate whether vehicle operator 300 of Figure 3 is unfit for safely operating vehicle 100 based on the health-related information received from personalized wearable device 301 of Figure 3.

In response to determining during operation 774 that there is another vehicle operator on-board the vehicle who is fit for safely operating the vehicle, the control and monitoring device may inform the other vehicle operator on-board the vehicle that the vehicle operator is unfit for safely operating the vehicle during operation 790.

For example, control and monitoring device 120 of Figure 3 may use wireless NFC unit 305 or wireless radio transmitter and receiver unit 106 to inform the other vehicle operator 300 on-board vehicle 100 via his wearable device 301 that vehicle operator 110 is unfit for safely operating vehicle 100.

In response to determining during operation 774 that there is no other vehicle operator on-board the vehicle or that the other vehicle operator is also unfit for safely operating the vehicle, the control and monitoring device may re-evaluate whether the vehicle operator is unfit for safely operating the vehicle based on the health-related information during operation 775.

In response to determining during operation 775 that the vehicle operator is unfit for safely operating the vehicle based on the health-related information, the control and monitoring device may use the vehicle management system to direct a vehicle operating system to initiate autonomous operation of the vehicle during operation 780.

For example, control and monitoring device 120 of Figure 5 may use vehicle management system 200 to direct vehicle operating system 501 to initiate autonomous operation of vehicle 100.

In case that vehicle operator 110 is unfit for safely operating the vehicle, a vehicle management system and/or a flight control computer (FCC) and/or an automatic flight control system (AFCS) may ignore the command inputs by the unfit vehicle operator 110 during operation 783. If present, the same may apply for an unfit vehicle operator 300.

For example, the vehicle management system 200 and/or the flight control computer (FCC) and/or the automatic flight control system (AFCS) 501 of Figure 5 may deny a change to the vehicle settings, a change to the flight management, flight planning, and/or the navigation data, and/or ignore any flight control inputs of the unfit vehicle operator 110 or 300.

During operation 785, the control and monitoring device may use a communication device to inform a remote surveillance station that autonomous operation of the vehicle has been initiated.

For example, control and monitoring device 120 of Figure 5 may use communication device 502 to inform remote surveillance station 504, 505 that autonomous operation of vehicle 100 has been initiated.

For example, the surveillance station may be any competent authority. As an example, consider the scenario in which the vehicle is an aircraft. In this scenario, the surveillance station may be a control tower 504 of a controlled airspace / airport or any air traffic control (ATC) 505 for the airspace in which the vehicle is currently operating or intends to operate during autonomous operation.

For example, the information exchanged with the remote surveillance station 504, 505 about the autonomous operation may concern the callsign of the aircraft, the type of aircraft, the number of passengers, the current position and altitude when switching to autonomous operation, a change of flight plan and change of flight rules, the intended route, waypoints and altitude, etc. In exchange the remote surveillance station may grant access rights to restricted or controlled airspaces, clear desired routes, flight speeds, headings and altitudes or advise changes of routes, flight speeds, headings and altitudes.

It should be noted that modifications to the above described embodiments are within the common knowledge of the person skilled in the art and, thus, also considered as being part of the present invention. It should further be noted that the drawings are only intended for schematically representing embodiments of the present invention and not for showing detailed constructions thereof.

For example, with reference to Figure 5, vehicle management system 200 may refuse and ignore command inputs from the vehicle operator 110 and refuse any modifications of avionics data or changes in settings initiated by the vehicle operator 110 in response to determining that the vehicle operator 110 is unfit for safely operating vehicle 100. However, vehicle management system 200 may provide for a manual override by the vehicle operator 110 in case of a wrongful detection that the vehicle operator 110 is unfit for operating the vehicle 100. For example, vehicle management system 200 may be overridden by vehicle operator 110 if the latter enters a predetermined code or presses a dedicated button, etc. that indicates that he or she is able to safely operate vehicle 100.

For example, vehicle management system 200 may be overridden by vehicle operator 110 if the latter enters a predetermined code, presses a dedicated button, or draws a predetermined pattern on the touchscreen etc. on the personalized wearable device 111.

As another example, personalized wearable device 111 of Figure 5 may be able to assess physiological and/or bio indicators of the vehicle operator 110 such as the vehicle operator's heart rate, electrocardiogram, sweating/electrical conductivity of the skin, body/skin temperature, blood oxygen saturation, blood pressure, etc. However, personalized wearable device 111 may also provide means to the vehicle operator 110 to declare himself or herself unfit for safely operating vehicle 100. For example, vehicle operator 110 may enter a predetermined code, press a dedicated button, or draw a predetermined pattern on the touchscreen etc. on personalized wearable device 111 that indicates that he or she is unable to safely operate vehicle 100.

Moreover, vehicle management system 200 of Figure 5 is shown to inform a control tower 504 and/or an air traffic control 505 on the ground 503 via the communication device 502 that the automatic flight control system (AFCS) 501 of the aircraft 100 has taken over control of the aircraft 100 in response to determining that the vehicle operator 110 is unfit for safely operating the vehicle 100. However, vehicle management system 200 may inform any other surveillance station that may be in the air (e.g., another aircraft or a balloon), in space (e.g., a satellite), or on water (e.g., a ship).

### Reference List 100 vehicle, aircraft, helicopter 101 fuselage

102 cabin
103 tail boom
104 main rotor
105 landing gear
106 wireless radio transmitter and receiver unit
107 display controller
108 usage monitoring system
109 data storage unit
110 vehicle operator
111 personalized wearable device
112 processing unit
113 identification unit
114 wireless communication unit
115 signal
116 data storage unit
118 cue generation unit
120 control and monitoring device
130 controllable device
200 vehicle management system (VMS)
201 motor
202 movement of the seat
203 seat
204 pedal
205 movement of the pedal
210 adjustable workspace
300 vehicle operator
301 personalized wearable device
302, 303 display
304, 305 radio frequency identification (RFID) / wireless near field communication (NFC) unit
306, 307, 308 display
309, 310 instrument panel, console
400 cues
401 engine control unit
402 sensor
403 sensor
404 display
405 tactile cues
406 visual cues
407 aural cues
410 vehicle monitoring system
413 engines
420 flight control
430 vibrating device, tactile cue device of flight control inceptor
431 flight control inceptor, grip of collective or cyclic stick, handle
440 display
450 speaker
460 channel selector
500 workload and health sensor
501 vehicle operating system, flight control computer (FCC), automatic flight control system (AFCS), autopilot (AP)
502 communication device
503 ground
504 control tower
505 remote surveillance station, air traffic control (ATC)
600 flowchart
610, 620 operation
710, 715, 718 flowchart
720, 730, 731, 740, 750, 760, 770, 772, 774, 775, 780, 783, 785, 790 operation

## Claims

1. A control and monitoring device (120) for a vehicle (100) with a controllable device (130), wherein the vehicle (100) is operated by a vehicle operator (110) wearing a personalized wearable device (111), comprising:
a wireless radio transmitter and receiver unit (106) that is adapted for communicating with the personalized wearable device (111) of the vehicle operator (110); and
a vehicle management system (200) that is adapted to send alert information to the personalized wearable device (111) via the wireless radio transmitter and receiver unit (106) and to receive status information from the personalized wearable device (111) via the wireless radio transmitter and receiver unit (106),
wherein the status information comprises at least one of preferred workspace settings of the vehicle operator (110) or health-related information about the vehicle operator (110), and wherein the vehicle management system (200) controls the controllable device (130) based on the at least one of the preferred workspace settings or the health-related information.

2. The control and monitoring device (120) of claim 1, wherein the controllable device (130) comprises an adjustable workspace (210) for the vehicle operator (110), wherein the status information comprises the preferred workspace settings, and wherein the vehicle management system (200) directs adjustment of the adjustable workspace (210) based on the preferred workspace settings.

3. The control and monitoring device (120) of claim 2, wherein the adjustable workspace (210) comprises a pedal (204), a seat (203), and at least one motor (201), and wherein the vehicle management system (200) directs the at least one motor (201) to adjust a position of the pedals (204) relative to the seat (203) based on the preferred workspace settings.

4. The control and monitoring device (120) of claims 2 or 3, wherein the adjustable workspace (210) comprises at least one display (302, 303, 306, 307, 308), and wherein the vehicle management system (200) directs configuration of the at least one display (302, 303) and selects the information displayed on the at least one display (302, 303) based on the preferred workspace settings.

5. The control and monitoring device (120) of any one of the preceding claims, wherein the status information further comprises identifying information about the vehicle operator (110), and wherein the vehicle management system (200) directs the controllable device (130) to grant or deny the vehicle operator (110) access to the vehicle (100) based on the identifying information about the vehicle operator (110).

6. The control and monitoring device (120) of any one of the preceding claims, wherein the vehicle management system (200) directs at least one of a vehicle operating system, a flight control computer, an automatic flight control system, or an autopilot (501) to either accept and execute or refuse and ignore flight control inputs from the vehicle operator (110) based on the status information from the personalized wearable device (111).

7. The control and monitoring device (120) of any one of the preceding claims, further comprising:
a vehicle monitoring system (410) that monitors the vehicle (100) and sends associated monitored information about the vehicle to the vehicle management system (200), wherein the vehicle management system (200), assesses the associated monitored information from the vehicle monitoring system (410), and, upon a detection of a safety-critical event, directs the wireless radio transmitter and receiver unit (106) to send the alert information to the personalized wearable device (111).

8. The control and monitoring device (120) of any one of the preceding claims, further comprising:
a usage monitoring system (108) that monitors a current usage of the vehicle (100) and communicates the current usage to the vehicle management system (200), wherein the vehicle management system (200), compares the current usage from the usage monitoring system (108) with a planned usage and a safe domain of usage of the vehicle (100), and, upon a detection of a deviation of the current usage from the planned usage or upon a detection of an exceedance of the current usage beyond the safe domain of usage of the vehicle (100) directs the wireless radio transmitter and receiver unit (106) to send the alert information to the personalized wearable device (111).

9. The control and monitoring device (120) of claim 8, wherein the alert information causes the personalized wearable device (111) to create cues in order to alert the vehicle operator (110) about the deviation of the current usage from the planned usage or about the detection of the exceedance of the current usage beyond the safe domain of usage of the vehicle (100).

10. The control and monitoring device (120) of any one of the preceding claims, wherein the status information about the vehicle operator (110) comprises the health-related information, and wherein the control and monitoring device (120) is further adapted to determine whether the vehicle operator (110) is unfit for safely operating the vehicle (100) based on at least one of the health-related information or a current workload of the vehicle operator (110).

11. The control and monitoring device (120) of claim 10, wherein the vehicle management system (200) directs a vehicle operating system (501) to initiate autonomous operation of the vehicle (100) in response to determining that the vehicle operator (110) is unfit for safely operating the vehicle (100).

12. The control and monitoring device (120) of claim 11, further comprising:
a communication device (502), wherein the vehicle management system (200) informs a remote surveillance station (504, 505) via the communication device (502) that autonomous operation of the vehicle (100) has been initiated in response to determining that the vehicle operator (110) is unfit for safely operating the vehicle (100).

13. The control and monitoring device (120) of claim 10, wherein the vehicle (100) is further operated by an additional vehicle operator (300) wearing an additional personalized wearable device (301), and wherein the control and monitoring device (120) further comprises:
first and second radio frequency identification or wireless near field communication units (304, 305), wherein the first radio frequency identification or wireless near field communication unit (304) is adapted for identifying and communicating with the personalized wearable device (111) of the vehicle operator (110), and wherein the second radio frequency identification or wireless near field communication unit (305) is adapted for identifying and communicating with the additional personalized wearable device (301) of the additional vehicle operator (300).

14. The control and monitoring device (120) of claim 13, wherein the vehicle management system (200), in response to determining that the vehicle operator (110) is unfit for safely operating the vehicle (100), directs the second radio frequency identification or wireless near field communication unit (305) to send additional alert information to the additional personalized wearable device (301) that causes the additional personalized wearable device (301) to create cues in order to alert the additional vehicle operator (300) to the fact that the vehicle operator (110) is unfit for safely operating the vehicle (100).

15. A vehicle (100) comprising the control and monitoring device (120) of any one of the preceding claims.
